# EUROPÄISCHE PATENTSCHRIFT

(11) **EP 1 485 580 B1**
(45) Veröffentlichungstag und Bekanntmachung des Hinweises auf die Patenterteilung: **28.09.2005**
(21) Anmeldenummer: 03706461.5
(22) Anmeldetag: 08.02.2003
(51) Int. Cl.: F01L 1/34, F01L 1/344, F16D 3/10

(54) **ANTRIEB FÜR VENTILTRIEBSTEUERUNGEN VON FAHRZEUGEN, VORZUGSWEISE VON NOCKENWELLENVERSTELLER**
DRIVE FOR VALVE OPERATING CONTROL SYSTEMS IN MOTOR VEHICLES, PREFERABLY CAMSHAFT ADJUSTERS
SYSTEME D'ENTRAINEMENT POUR COMMANDES DE MECANISMES DE DISTRIBUTION DE VEHICULES, DE PREFERENCE POUR SYSTEMES DE DEPLACEMENT D'ARBRES A CAMES

(30) Priorität: 12.03.2002 DE 10211607
(43) Veröffentlichungstag der Anmeldung: 15.12.2004
(73) Patentinhaber: Dr. Ing. H.C.F. Porsche Aktiengesellschaft, 70435 Stuttgart (DE); HYDRAULIK-RING GMBH, 72622 Nürtingen (DE)
(72) Erfinder: KNECHT, Andreas, 72127 Kusterdingen (DE); SCHNEIDER, Guido, 70734 Fellbach (DE); SLUKA, Gerold, 72622 Nürtingen (DE); STEPHAN, Wolfgang, 72087 Boll (DE)
(86) Internationale Anmeldenummer: PCT/EP2003/001262
(87) Internationale Veröffentlichungsnummer: WO 2003/076771

(56) Entgegenhaltungen:
- DE-A- 19 616 266
- DE-A- 19 858 205
- US-A- 5 836 278
- US-A- 5 860 397
- US-A- 5 875 750
- US-A1- 2003 037 741
- US-B1- 6 386 166
- US-B1- 6 405 696

## Beschreibung

Die Erfindung betrifft einen Antrieb für Ventiltriebsteuerungen von Fahrzeugen, vorzugsweise für Nockenwellenversteller, nach dem Oberbegriff des Anspruches 1.

Bekannte Antriebe für Ventiltriebsteuerungen bestehen aus einer Vielzahl von Bauteilen, (siehe z.B. US-A-5 875 750 oder DE 198 58 205) wie einem Antriebsrad, einer Abdeckung, einem Stator, einem Abschlußring, einem Dichtring, einem Rotor und einem Andrückring. Die hochbeanspruchten Teile werden hierbei aus Stahl, Metallegierungen bzw. Nicht-Eisenlegierungen hergestellt. Die Herstellung dieser einzelnen Teile sowie deren Montage ist aufwendig und teuer.

Der Erfindung liegt die Aufgabe zugrunde, den gattungsgemäßen Antrieb so auszubilden, daß er aus wenigen Bauteilen kostengünstig hergestellt und montiert werden kann.

Diese Aufgabe wird beim gattungsgemäßen Antrieb erfindungsgemäß mit den kennzeichnenden Merkmalen des Anspruches 1 gelöst.

Beim erfindungsgemäßen Antrieb sind das Antriebsrad und wenigstens eines der Funktionsteile einstückig aus dem hochbelastbaren, nichtmetallischen Werkstoff hergestellt. Durch den Einsatz des hochbelastbaren Werkstoffes lassen sich komplizierte Teile kostengünstig und mit niedrigem energetischen Aufwand herstellen. Die Bauteilezahl wird verringert, so daß nicht nur die Herstellungskosten gesenkt, sondern auch die Montagekosten erniedrigt werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: im Axialschnitt eine erste Ausführungsform eines erfindungsgemäßen Antriebes,
- Fig. 2: im Axialschnitt eine zweite Ausführungsform eines erfindungsgemäßen Antriebes,
- Fig. 3: in perspektivischer Darstellung ein Kettenrad und einen einstückig mit ihm ausgebildeten Stator des erfindungsgemäßen Antriebes,
- Fig. 4: im Axialschnitt einen Teil einer weiteren Ausführungsform eines erfindungsgemäßen Antriebes,
- Fig. 5: die Einzelheit X in Fig. 4 in vergrößerter Darstellung,
- Fig. 6: in perspektivischer Darstellung ein Zahnriemenrad, eine Abdeckung, einen Abschlußring und einen Stator des erfindungsgemäßen Antriebes, die einstückig miteinander ausgebildet sind,
- Fig. 7: in Explosivdarstellung ein Zahnriemenrad, eine Abdeckung, einen Abschlußring und einen Stator eines bekannten Antriebes,
- Fig. 8: in Explosivdarstellung den Antrieb gemäß Fig. 1,
- Fig. 9: in explosiver Darstellung einen bekannten Antrieb,
- Fig. 10: in perspektivischer Darstellung einen Teil des erfindungsgemäßen Antriebes,
- Fig. 11: in perspektivischer Darstellung die Anordnung eines Gewindebolzens im erfindungsgemäßen Antrieb,
- Fig. 12: den Gewindebolzen gemäß Fig. 11 in einer anderen Ansicht.

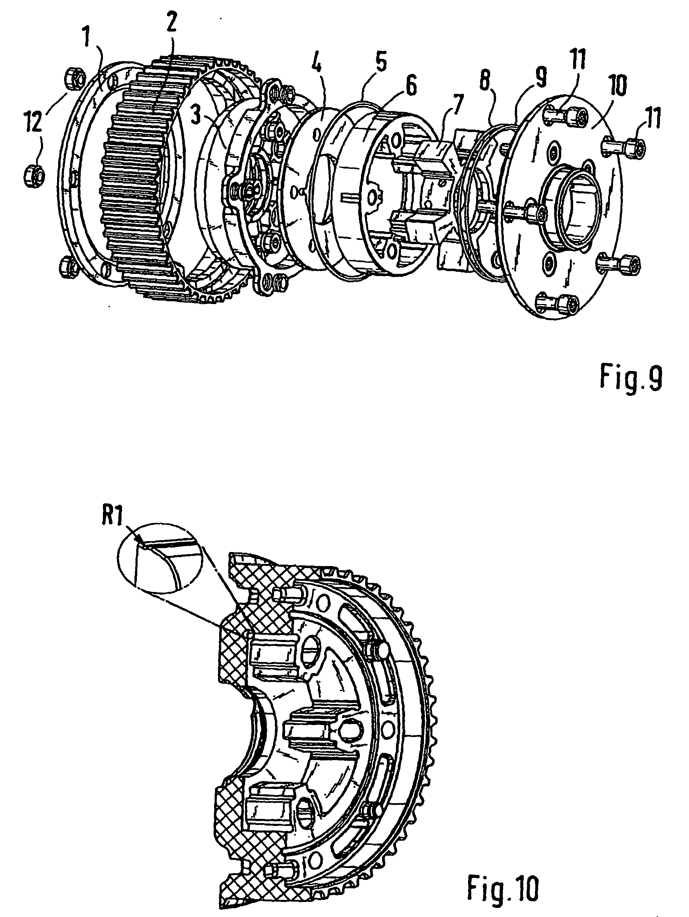

Fig. 9 zeigt einen bekannten Schwenkmotor, der Teil einer Nockenwellenverstelleinrichtung ist, die in Kraftfahrzeugen eingesetzt wird. Dieser Schwenkmotor hat einen Andrückring 1, ein Zahnriemenrad/Kettenrad 2, eine haubenförmige Abdeckung 3, einen flachen Abschlußring 4, einen Dichtring 5, einen Stator 6, einen Rotor 7, Dichtringe 8, 9 und eine Radscheibe 10. Diese Teile werden in bekannter Weise zusammengesetzt und mit Gewindebolzen 11 zusammengehalten, die über den Umfang des Schwenkmotors verteilt angeordnet sind und den Andrückring 1 durchsetzen. Die Gewindebolzen 11 werden in Muttern 12 geschraubt, die an der von der Abdeckung 3 abgewandten Seite des Andrückringes 1 anliegen. Mit den Gewindebolzen 11 und den Muttern 12 werden die beschriebenen Teile des Schwenkmotors axial zusammengehalten. Die hoch belastbaren Teile des Schwenkmotors, wie das Zahnriemen/Kettenrad 2, der Stator 6 oder die Abdeckung 3, werden aus Stahl, Metallegierungen oder aus Nicht-Eisenlegierungen hergestellt. Die Herstellung dieser Teile aus den genannten Materialien ist aufwendig und teuer. Die Vielzahl von Einzelteilen erschwert und verteuert auch die Montage des Schwenkmotors.

Um die Teile des Schwenkmotors kostengünstig und mit niedrigem energetischen Aufwand beim geringer Teilezahl herstellen zu können, werden für die hochbelasteten bzw. hochbeanspruchten Teile des Schwenkmotors hochbelastbare nichtmetallische Werkstoffe eingesetzt, die wenigstens einen hochbelastbaren Kunststoff enthalten. Obwohl der Werkstoff außer Kunststoff noch weitere Bestandteile enthält, wird im folgenden der Einfachheit halber von hochbelastbaren Kunststoffen gesprochen. Durch die Verwendung von solchen hochbelastbaren Werkstoffen lassen sich außerdem Teile des Schwenkmotors, wie das Zahnriemen/Kettenrad 2 mit dem Stator 6, das Zahnriemen/Kettenrad 2 mit der Abdeckung 3, das Zahnriemen/Kettenrad 2 mit der Abdeckung 3 und der Radscheibe 10, das Zahnriemen/Kettenrad 2 mit der Abdeckung 3, der Radscheibe 10 und dem Dichtring 5 jeweils aus einem Teil fertigen. Insertteile, wie die Schrauben 11, die Muttern 12, Buchsen und Dichtungen und dergleichen können in den hochbelastbaren Kunststoff eingespritzt werden. Es besteht sogar die Möglichkeit, ein Gewinde direkt in den Kunststoff zu schneiden und zu spritzen. Da die Dichtringe in den Kunststoff integriert werden können, lassen sich auch Montageabläufe bei der Herstellung des Schwenkmotors vereinfachen. Auf diese Weise kann die Zahl der Dichtungen auf ein Minimum reduziert werden. Aufgrund der einstückig miteinander ausgebildeten Teile des Schwenkmotors können die Herstellungskosten gesenkt werden. Außerdem ergibt sich dadurch ein geringer Fertigungsaufwand.

Der eingesetzte hochbelastbare Kunststoff hat gleiche Temperaturausdehnung wie Metall, insbesondere wie Stahl, so daß beim Einbau dieses Schwenkmotors im Motorraum des Kraftfahrzeuges infolge der dort herrschenden Temperaturen keine Probleme auftreten. Der Kunststoff hat vorteilhaft gleiche Festigkeitseigenschaften wie Stahl. In den Bereichen, in denen der Kunststoff von Schrauben durchsetzt ist, weist er vorteilhaft minimales Setzverhalten auf, so daß die durch die Schrauben zusammengehaltenen Teile sich im Einsatz nicht lockern und über die Einsatzdauer des Schwenkmotors zuverlässig zusammengehalten werden. Der eingesetzte hochbelastbare Kunststoff zeichnet sich durch eine sehr hohe Form- und Maßgenauigkeit aus. Insbesondere die Eckenradien im Bereich zwischen dem Stator 6 und Abdeckelementen können dadurch mit hoher Form- und Maßgenauigkeit ausgebildet werden.

Insbesondere im Bereich des Zahnriemen/Kettenrades 2 hat der hochbelastbare Kunststoff eine sehr hohe Verschleißfestigkeit, so daß die Beanspruchung durch die über das Rad 2 laufenden Zahnriemen, Ketten, Zahnräder und metallischen Reibpartner sehr gering ist. Darüber hinaus ist der Kunststoff öl-, diesel- und benzinfest. Der Kunststoff selbst ist temperaturfest und darum für direkte Motoranwendungen hervorragend geeignet. Nicht zu vernachlässigen ist die Recyclefähigkeit des Kunststoffes.

Durch den Einsatz der hochbelastbaren Kunststoffe lassen sich die statischen, hydraulischen, dynamischen, tribologischen und mechanischen Eigenschaften speziell für Schwenkmotoren von Ventiltriebsteuerungen erzielen. Der Werkstoff, der diesen Anforderungen genügt, enthält zwischen etwa 15 % und 30 %, vorzugsweise etwa 20 % Harz, zwischen etwa 15 % und 30 %, vorzugsweise etwa 20 % Glasfasern und etwa 45 % bis etwa 65 % Mineralstoffe, vorzugsweise etwa 60 % Mineralstoffe.

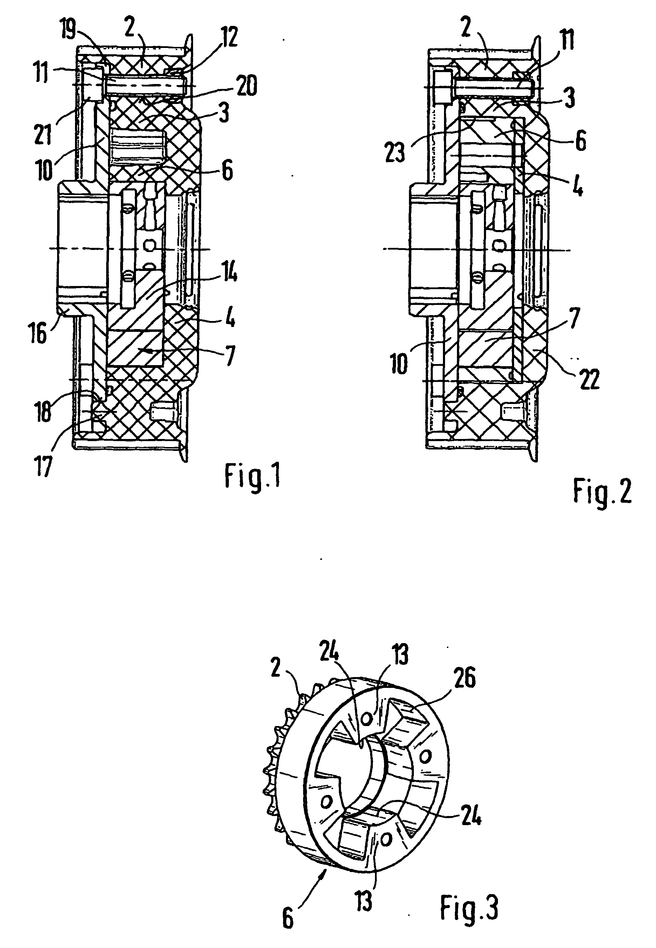

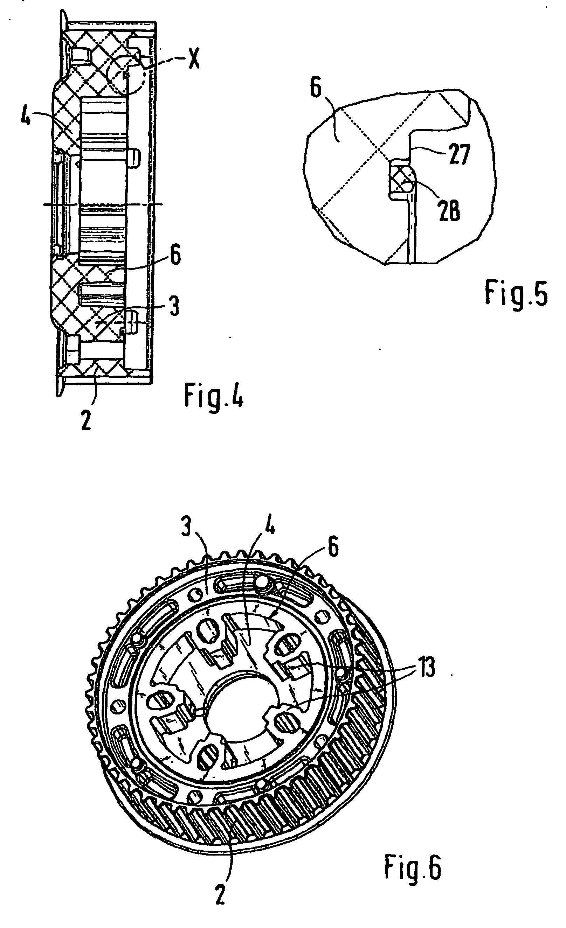

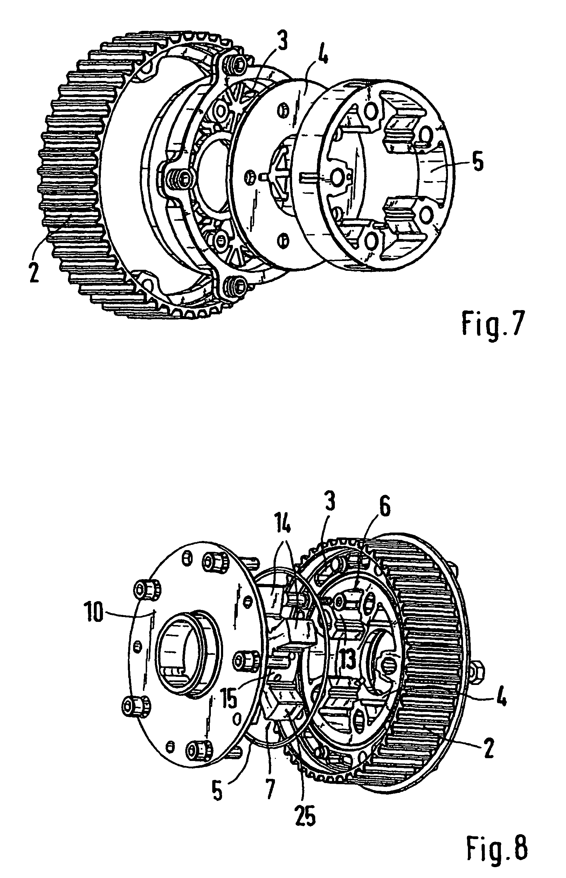

Fig. 1 zeigt einen Schwenkmotor im zusammengebauten Zustand, der nur noch aus wenigen Bauteilen besteht. Er hat das Zahnriemenrad 2, das einstückig mit der haubenförmigen Abdeckung 3 und dem Stator 6 ausgebildet ist. Der Stator 6 hat, wie sich beispielsweise aus Fig. 6 ergibt, in bekannter Weise radial nach innen gerichtete Flügel 13, die gleichmäßig verteilt über den Innenumfang des Stators 6 angeordnet sind. Zwischen die Flügel 13 des Stators 6 greifen Flügel 14 des Rotors 7 in bekannter Weise ein (Fig. 8). Die Flügel 14 stehen radial nach außen von einem ringförmigen Grundkörper 15 ab. Wie Fig. 8 zeigt, sind die Flügel 14 über den Umfang des Grundkörpers 15 gleichmäßig verteilt angeordnet. Die Flügel 14 können von beiden Seiten in bekannter Weise mit Druckmedium beaufschlagt werden, so daß die Flügel 14 zwischen benachbarten Flügeln 13 des Stators 6 gedreht werden können. Der Rotor 7 besteht aus metallischem Werkstoff und liegt auf dem Abschlußring 4 auf, der einstückig mit dem Stator 6 und damit mit der Abdeckung 3 und dem Riemenrad 2 ausgebildet ist. An der gegenüberliegenden Seite liegt die Radscheibe 10 am Rotor 14 an. Die Radscheibe 10 hat zentral einen axial vorstehenden buchsenförmigen Ansatz 16. Die Radscheibe 10 lieg auch auf der Abdeckung 3 und dem Stator 6 auf und wird axial vom Zahnriemen 2 überragt, der seinerseits vom Ansatz 16 axial überragt wird.

Der Stator 3 ist mit über seinen Umfang verteilt angeordneten Vorsprüngen 17 versehen, die in entsprechende Öffnungen 18 nahe dem äußeren Rand der Radscheibe 10 eingreifen. Die Radscheibe 10 ist außerdem mit Durchtrittsöffnungen 19 für die Gewindebolzen 11 versehen, die durch axiale Öffnungen 20 in der Abdeckung 3 ragen und in die Muttern 12 geschraubt sind, die vorteilhaft in den Kunststoff eingebettet sind. Die Köpfe 21 der Gewindebolzen 11 liegen vertieft im Zahnriemenrad 2.

Da bei diesem Schwenkmotor das Zahnriemenrad 2, die Abdeckung 3, der Stator 6 und der Abschlußring 4 einstückig aus Kunststoff hergestellt sind, werden nicht nur Kosten für die Herstellung gespart, sondern es werden auch das Gewicht des Schwenkmotors und der Montageaufwand in erheblichem Maße verringert. Die Radscheibe 10, die ebenfalls aus hochbelastbarem Kunststoff bestehen kann, weist lediglich im radial äußeren Bereich die Öffnungen 20 für den Durchtritt der Gewindebolzen 11 auf.

Bei der Ausführungsform nach Fig. 2 sind das Zahnriemenrad 2 und die haubenförmige Abdeckung 3 einstückig aus dem hochbelastbaren Kunststoff hergestellt. Der Stator 6 und der Rotor 7 sind als getrennte Bauteile in die Abdeckung 3 eingelegt und bestehen aus dem herkömmlichen Material. Selbstverständlich können der Stator 6 und/oder der Rotor 7 auch aus dem hochbelastbaren Kunststoff bestehen.

Auf den Boden 22 der Abdeckung 3 ist der Abschlußring 4 aufgelegt, auf dem der Stator 6 und der Rotor 7 aufliegen. Entsprechend der vorhergehenden Ausführungsform liegt an der gegenüberliegenden Seite die Radscheibe 10 auf dem Stator 6 und dem Rotor 7 auf. Sie ist mit den Gewindebolzen 11 in der anhand des vorigen Ausführungsbeispieles beschriebenen Weise befestigt.

Der Stator 6 liegt an der zylindrischen Innenwand 23 der Abdeckung 3 an, wodurch eine einwandfreie radiale Ausrichtung des Stators 6 gegenüber der Abdeckung 3 gewährleistet ist.

Der Grundkörper 15 (Fig. 8) des Motors 7 hat eine auf einem Zylindermantel liegende Mantelfläche, von der die Flügel 14 radial nach außen abstehen. Die Stirnseiten 24 (Fig. 3) der Flügel 13 des Stators 6 liegen auf einem gedachten Zylindermantel. An diesen Stirnseiten 24 liegt der Grundkörper 15 des Rotors 7 flächig an.

Im übrigen ist der Schwenkmotor gemäß Fig. 2 gleich ausgebildet wie das Ausführungsbeispiel gemäß Fig. 1.

Fig. 3 zeigt den Stator 6, der einstückig mit dem Kettenrad 2 aus hochbelastbarem Kunststoff hergestellt ist. Der Stator 6 ist gleich ausgebildet wie bei den vorigen Ausführungsbeispielen und hat die radial nach innen ragenden Flügel 13 mit den auf einem gedachten Zylindermantel liegenden Stirnseiten 24. Der Stator 6 mit dem Kettenrad 2 wird, wie anhand der Fig. 1 und 2 beschrieben, in die haubenförmige Abdeckung 3 eingesetzt und mit Hilfe der Abdeckscheibe 10, den Gewindebolzen 11 und den Muttern 12 befestigt. Der Rotor 7 liegt im Stator 6, wobei dessen Flügel 14 in den Bereich zwischen den benachbarten Flügeln 13 des Stators 6 ragen. Die Stirnseiten 25 (Fig. 8) der Flügel 14 des Rotors 7 liegen auf einem gedachten Zylindermantel, dessen Durchmesser dem Innendurchmesser des Stators 6 entspricht. Dadurch liegen die Flügel 14 des Rotors 7 mit ihren Stirnseiten 25 flächig an der zylindrischen Innenwand 26 des Stators 6 an, von der die Flügel 13 radial nach innen abstehen.

Die Fig. 4 und 5 zeigen eine Ausführungsform, bei der das Zahnriemenrad 2, die haubenförmige Abdeckung 3, der Abschlußring 4 und der Stator 6 wiederum einstückig aus dem hochbelastbaren Kunststoff gefertigt sind. Zusätzlich ist in die Stirnseite 27, auf der bei montiertem Schwenkmotor die Radscheibe 10 aufliegt, ein Dichtring 28 integriert, der aus einem geeigneten Dichtwerkstoff besteht. Dieser Dichtring 28 wird bei der Herstellung in der Spritzgießform zur Herstellung des Bauteiles nach Fig. 4 eingelegt, so daß der Dichtring 28 nicht nachträglich eingelegt werden muß. Dadurch wird ein Montageschritt eingespart. Außerdem wird der Dichtring 28 optimal im Kunststoff gehalten, so daß nicht die Gefahr besteht, daß er unbeabsichtigt vom Stator 6 gelöst wird. Der Dichtring 28 steht über die Stirnseite 27 des Stators 6 vor, so daß beim Aufsetzen der Radscheibe 10 und Befestigen mittels der Gewindebolzen 11 der Dichtring 28 ausreichend elastisch verformt wird und eine einwandfreie Abdichtung gewährleistet.

In den Stator 6 wird der Rotor 7 eingelegt, wie aus den Fig. 1 und 2 hervorgeht Im übrigen entspricht diese Ausführungsform dem Ausführungsbeispiel nach Fig. 1.

Fig. 6 zeigt das Bauteil gemäß Fig. 4 mit dem Zahnradriemenrad 2, dem Abschlußring 4, dem Stator 6 und der haubenförmigen Abdeckung 3. Da diese Funktionselemente des Schwenkmotors zu einem Bauteil zusammengefaßt sind, ist eine einfache und vor allen Dingen kostensparende Montage des Schwenkmotors gewährleistet.

Fig. 7 zeigt die herkömmliche Ausbildung, bei der für die Funktionselemente gemäß Fig. 6 vier Bauteile notwendig sind, nämlich das Zahnriemenrad 2, die Abdeckung 3, der Abschlußring 4 und der Stator 5. Es sind somit bei diesem bekannten Schwenkmotor vier Bauteile vorgesehen, die jeweils gesondert hergestellt und miteinander verbunden werden müssen. Dadurch ist die Herstellung und die Montage eines aus diesen Bauteilen bestehenden Schwenkmotors aufwendig und kostspielig. Ein Vergleich mit Fig. 6 zeigt die besondere Einfachheit, die sich dadurch ergibt, daß das Zahnriemenrad 2, die Abdeckung 3, der Stator 6 und der Abschlußring 4 aus einem Stück bestehen.

Fig. 8 zeigt den kompletten Schwenkmotor mit der Radscheibe 10, dem Dichtring 5, dem Rotor 7 sowie der einstückigen Baueinheit aus Zahnriemenrad 2, Abdeckung 3, Stator 6 und Abschlußring 4. Für diesen Schwenkmotor sind somit insgesamt nur vier Bauteile notwendig, während beim herkömmlichen Schwenkmotor, wie Fig. 9 zeigt, elf Bauteile notwendig sind. Es ist offensichtlich, daß die Herstellung und der Zusammenbau dieses bekannten Schwenkmotors äußerst aufwendig und insbesondere kostspielig ist. Beim Schwenkmotor gemäß Fig. 8 sind nur vier Bauteile miteinander zu verbinden, wodurch sich eine sehr einfache und kostengünstige Herstellung und Montage ergibt.

Infolge der Verwendung des hochbelastbaren Kunststoffes können die Bauteile des Schwenkmotors mit hoher Form- und Maßgenauigkeit hergestellt werden. So zeigt Fig. 10 beispielhaft, daß der Eckradius R1 in einfacher Weise mit hoher Form- und Maßgenauigkeit gefertigt werden kann. Der in Fig. 10 angegebene Eckradius ist nur als Beispiel angegeben. Andere Eckradien sind an weiteren Bereichen dieses Bauteiles vorgesehen. Aber auch andere Abmessungen und/oder Formen dieses einstückigen Bauteiles können mit hoher Form- und Maßgenauigkeit gefertigt werden.

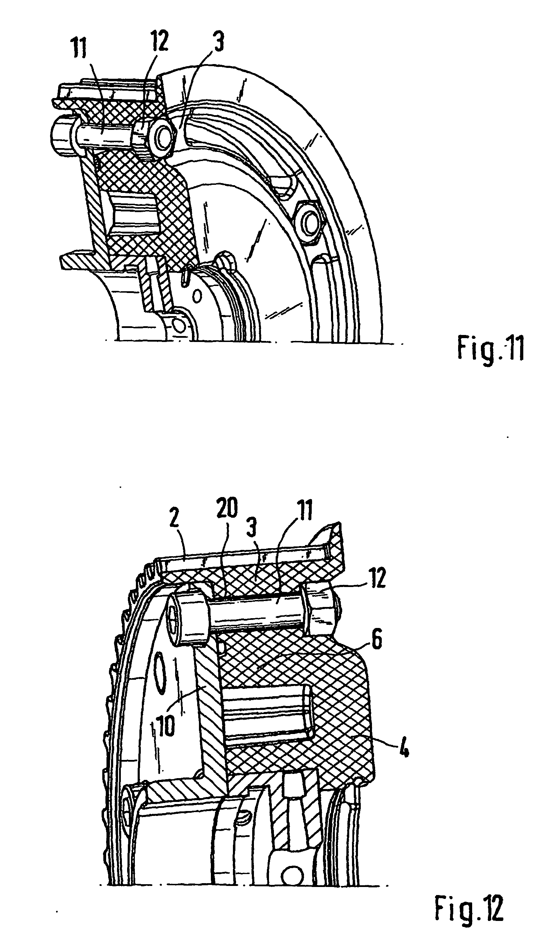

Fig. 11 zeigt die Mutter 12, die in die Abdeckung 3 eingespritzt ist. Der Gewindebolzen 11 muß dann nur noch in die bereits in der Abdeckung 3 befindliche Mutter 12 geschraubt werden. Dadurch ist gewährleistet, daß die Muttern 12 auf jeden Fall vorhanden sind, wenn die einzelnen Teile zum Schwenkmotor zusammengesetzt werden.

Es ist auch möglich, anstelle der eingespritzten Mutter 12 die Öffnung 20 in der Abdeckung 3 als Gewindebohrung auszubilden. Dann ist eine Mutter 12 für die Gewindebolzen 11 nicht erforderlich. Dieses Gewinde kann unmittelbar beim Spritzvorgang dieses Kunststoffteiles vorgesehen werden. Es ist aber auch möglich, die Gewindebohrung 20 nachträglich in der Abdeckung 3 einzubringen.

## Patentansprüche

1. Antrieb für Ventilfriebsteuerungen von Fahrzeugen, vorzugsweise für Nockenwellenversteller, mit mindestens einem Antriebsrad und Funktionsteilen, wie Abdeckung, Stator, Abschlußring und Dichtring, sowie mit mindestens einem Rotor, **dadurch gekennzeichnet, daß** das Antriebsrad (2) und wenigstens eines der Funktionsteile (3 bis 6) einstückig aus einem hochbelastbaren, nichtmetallischen Werkstoff hergestellt sind.

2. Antrieb nach Anspruch 1, **dadurch gekennzeichnet, daß** das Antriebsrad (2) und der Stator (6) einstückig miteinander ausgebildet sind.

3. Antrieb nach Anspruch 1, **dadurch gekennzeichnet, daß** das Antriebsrad (2) und die Abdeckung (3) einstückig miteinander ausgebildet sind.

4. Antrieb nach einem der Ansprüche 1 bis 3, **dadurch gekennzeichnet, daß** das Antriebsrad (2), die Abdeckung (3) und der Stator (6) einstückig miteinander ausgebildet sind.

5. Antrieb nach einem der Ansprüche 1 bis 4, **dadurch gekennzeichnet, daß** das Antriebsrad (2), die Abdeckung (3), der Stator (6) und der Abschlußring (4) einstückig miteinander ausgebildet sind.

6. Antrieb nach einem der Ansprüche 1 bis 5, **dadurch gekennzeichnet, daß** der Dichtring (28) in die Abdeckung (3) integriert ist.

7. Antrieb nach Anspruch 6, **dadurch gekennzeichnet, daß** der Dichtring (28) durch den die Abdeckung (3) bildenden Werkstoff teilweise umspritzt ist.

8. Antrieb nach einem der Ansprüche 1 bis 7, **dadurch gekennzeichnet, daß** der Rotor (7) zwischen dem Abschlußring (4) und einer Abdeckscheibe (10) lagegesichert ist.

9. Antrieb nach Anspruch 8, **dadurch gekennzeichnet, daß** die Abdeckscheibe (10) durch Gewindebolzen (11) gehalten ist.

10. Antrieb nach Anspruch 9, **dadurch gekennzeichnet, daß** den Gewindebolzen (11) Muttern (12) zugeordnet sind, die in die Abdeckung (3) eingespritzt sind.

11. Antrieb nach Anspruch 9, **dadurch gekennzeichnet, daß** die Gewindebolzen (11) in Gewindeöffnungen (20) in der Abdeckung (3) geschraubt sind.

12. Antrieb nach einem der Ansprüche 1 bis 11, **dadurch gekennzeichnet, daß** das Antriebsrad (2) ein Riemenrad, insbesondere ein Zahnriemenrad ist.

13. Antrieb nach einem der Ansprüche 1 bis 11, **dadurch gekennzeichnet, daß** das Antriebsrad (2) ein Kettenrad ist.

14. Antrieb nach einem der Ansprüche 1 bis 13, **dadurch gekennzeichnet, daß** der Rotor (7) aus metallischem Werkstoff besteht.

15. Antrieb nach einem der Ansprüche 1 bis 13, **dadurch gekennzeichnet, daß** der Rotor (7) aus hochbelastbarem, nichtmetallischem Werkstoff besteht.

16. Antrieb nach einem der Ansprüche 1 bis 15, **dadurch gekennzeichnet, daß** der Rotor (7) aus dem gleichen Werkstoff wie das Antriebsrad (2) besteht.

17. Antrieb nach einem der Ansprüche 8 bis 16, **dadurch gekennzeichnet, daß** die Abdeckscheibe (10) aus metallischem Werkstoff besteht.

18. Antrieb nach einem der Ansprüche 8 bis 16, **dadurch gekennzeichnet, daß** die Abdeckscheibe (10) aus hochbelastbarem, nichtmetallischem Werkstoff besteht.

19. Antrieb nach einem der Ansprüche 1 bis 18, **dadurch gekennzeichnet, daß** die Abdeckscheibe (10) aus dem gleichen nichtmetallischen Werkstoff besteht wie das Antriebsrad (2).

20. Antrieb nach einem der Ansprüche 1 bis 19, **dadurch gekennzeichnet, daß** der hochbelastbare nichtmetallische Werkstoff Duroplast enthält.

21. Antrieb nach Anspruch 20, **dadurch gekennzeichnet, daß** der Duroplast ein Harz ist.

22. Antrieb nach Anspruch 20 oder 21, **dadurch gekennzeichnet, daß** der Duroplast, vorzugsweise das Harz, zwischen etwa 15 % und 30 %, vorzugsweise etwa 20 %, im nichtmetallischen Werkstoff enthalten ist.

23. Antrieb nach einem der Ansprüche 1 bis 22, **dadurch gekennzeichnet, daß** der hochbelastbare Werkstoff zwischen etwa 15 % und 30 %, vorzugsweise etwa 20 %, Füllstoffe, vorzugsweise Glasfasern, enthält.

24. Antrieb nach einem der Ansprüche 1 bis 23, **dadurch gekennzeichnet, daß** der hochbelastbare nichtmetallische Werkstoff zwischen etwa 45 % und 65 %, vorzugsweise etwa 60 %, Mineralstoffe enthält.

## Claims

1. A drive for valve-gear control mechanisms in vehicles, preferably for camshaft adjusters, comprising at least one drive wheel and functional parts, such as a cover, stator, closing ring and sealing ring, and at least one rotor, **characterised in that** the drive wheel (2) and at least one of the functional parts (3 to 6) are formed in one piece from a highly loadable, non-metallic material.

2. A drive according to claim 1, **characterised in that** the drive wheel (2) and the stator (6) are formed in one piece with each other.

3. A drive according to claim 1, **characterised in that** the drive wheel (2) and the cover (3) are formed in one piece with each other.

4. A drive according to any one of claims 1 to 3, **characterised in that** the drive wheel (2), the cover (3) and the stator (6) are formed in one piece with each other.

5. A drive according to any one of claims 1 to 4, **characterised in that** the drive wheel (2), the cover (3), the stator (6) and the closing ring (4) are formed in one piece with each other.

6. A drive according to any one of claims 1 to 5, **characterised in that** the sealing ring (28) is integrated into the cover (3).

7. A drive according to claim 6, **characterised in that** the material forming the cover (3) is injection-moulded around part of the sealing ring (28).

8. A drive according to any one of claims 1 to 7, **characterised in that** the rotor (7) is positionally secured between the closing ring (4) and a covering disc (10).

9. A drive according to claim 8, **characterised in that** the covering disc (10) is held by threaded bolts (11).

10. A drive according to claim 9, **characterised in that** nuts (12), which are injection-moulded into the cover (3), are associated with the threaded bolts (11).

11. A drive according to claim 9, **characterised in that** the threaded bolts (11) are screwed into threaded openings (20) in the cover (3).

12. A drive according to any one of claims 1 to 11, **characterised in that** the drive wheel (2) is a belt wheel, especially a toothed-belt wheel.

13. A drive according to any one of claims 1 to 11, **characterised in that** the drive wheel (2) is a chain wheel.

14. A drive according to any one of claims 1 to 13, **characterised in that** the rotor (7) is made of metallic material.

15. A drive according to any one of claims 1 to 13, **characterised in that** the rotor (7) is made of highly loadable, non-metallic material.

16. A drive according to any one of claims 1 to 15, **characterised in that** the rotor (7) is made of the same material as the drive wheel (2).

17. A drive according to any one of claims 8 to 16, **characterised in that** the covering disc (10) is made of metallic material.

18. A drive according to any one of claims 8 to 16, **characterised in that** the covering disc (10) is made of highly loadable, non-metallic material.

19. A drive according to any one of claims 1 to 18, **characterised in that** the covering disc (10) is made of the same non-metallic material as the drive wheel (2).

20. A drive according to any one of claims 1 to 19, **characterised in that** highly loadable, non-metallic material contains thermosetting plastics.

21. A drive according to claim 20, **characterised in that** the thermosetting plastics is a resin.

22. A drive according to claim 20 or 21, **characterised in that** the thermosetting plastics, preferably the resin, is contained in the non-metallic material in an amount between approximately 15% and 30%, preferably approximately 20%.

23. A drive according to any one of claims 1 to 22, **characterised in that** highly loadable material contains between approximately 15% and 30%, preferably approximately 20%, of fillers, preferably glass fibres.

24. A drive according to any one of claims 1 to 23, **characterised in that** highly loadable, non-metallic material contains between approximately 45% and 65%, preferably approximately 60%, of mineral substances.

## Revendications

1. Dispositif d'entraînement pour commandes de soupapes de véhicule, de préférence pour variateur d'arbres à cames, comportant au moins une roue d'entraînement et des éléments fonctionnels tels que capot, stator, bague de fermeture et bague d'étanchéité, ainsi qu'au moins un rotor, **caractérisé en ce que** la roue d'entraînement (2) et au moins l'un des éléments fonctionnels (3 à 6) sont fabriqués d'une seule pièce dans un matériau non métallique à haute capacité de charge.

2. Dispositif d'entraînement selon la revendication 1, **caractérisé en ce que** la roue d'entraînement (2) et le stator (6) sont réalisés d'un seul tenant.

3. Dispositif d'entraînement selon la revendication 1, **caractérisé en ce que** la roue d'entraînement (2) et le capot (3) sont réalisés d'un seul tenant.

4. Dispositif d'entraînement selon l'une des revendications 1 à 3, **caractérisé en ce que** la roue d'entraînement (2), le capot (3) et le stator (6) sont réalisés d'un seul tenant.

5. Dispositif d'entraînement selon l'une des revendications 1 à 4, **caractérisé en ce que** la roue d'entraînement (2), le capot (3), le stator (6) et la bague de fermeture (4) sont réalisés d'un seul tenant.

6. Dispositif d'entraînement selon l'une des revendications 1 à 5, **caractérisé en ce que** la bague d'étanchéité (28) est intégrée au capot (3).

7. Dispositif d'entraînement selon la revendication 6, **caractérisé en ce que** la bague d'étanchéité (28) est en partie enrobée par le matériau formant le capot (3).

8. Dispositif d'entraînement selon l'une des revendications 1 à 7, **caractérisé en ce que** le rotor (7) est immobilisé entre la bague de fermeture (4) et un disque de recouvrement (10).

9. Dispositif d'entraînement selon la revendication 8, **caractérisé en ce que** le disque de recouvrement (10) est maintenu par un boulon (11).

10. Dispositif d'entraînement selon la revendication 9, **caractérisé en ce qu'**aux boulons filetés (11) sont associés des écrous (12) qui sont noyés dans le capot (3).

11. Dispositif d'entraînement selon la revendication 9, **caractérisé en ce que** les boulons filetés (11) sont vissés dans des trous taraudées (20) du capot (3).

12. Dispositif d'entraînement selon l'une des revendications 1 à 11, **caractérisé en ce que** la roue d'entraînement (2) est une roue à courroie, en particulier une roue à courroie crantée.

13. Dispositif d'entraînement selon l'une des revendications 1 à 11, **caractérisé en ce que** la roue d'entraînement (2) est une roue à chaîne.

14. Dispositif d'entraînement selon l'une des revendications 1 à 13, **caractérisé en ce que** le rotor (10) est constitué d'un matériau métallique.

15. Dispositif d'entraînement selon l'une des revendications 1 à 13, **caractérisé en ce que** le rotor (7) est constitué d'un matériau non métallique à haute capacité de charge.

16. Dispositif d'entraînement selon l'une des revendications 1 à 15, **caractérisé en ce que** le rotor (7) est constitué du même matériau que la roue d'entraînement (2).

17. Dispositif d'entraînement selon l'une des revendications 8 à 16, **caractérisé en ce que** le disque de recouvrement (10) est constitué d'un matériau métallique.

18. Dispositif d'entraînement selon l'une des revendications 8 à 16, **caractérisé en ce que** le disque de recouvrement (10) est constitué d'un matériau non métallique à haute capacité de charge.

19. Dispositif d'entraînement selon l'une des revendications 1 à 18, **caractérisé en ce que** le disque de recouvrement (10) est constitué du même matériau non métallique que la roue d'entraînement (2).

20. Dispositif d'entraînement selon l'une des revendications 1 à 19, **caractérisé en ce que** le matériau non métallique à haute capacité de charge contient une matière plastique thermodurcissable.

21. Dispositif d'entraînement selon la revendication 20, **caractérisé en ce que** la matière plastique thermodurcissable est une résine.

22. Dispositif d'entraînement selon la revendication 20 ou 21, **caractérisé en ce que** la matière plastique thermodurcissable, de préférence la résine, est contenue à raison de 15 % à 30 % environ, de préférence à raison d'environ 20 %, dans le matériau non métallique.

23. Dispositif d'entraînement selon l'une des revendications 1 à 22, **caractérisé en ce que** le matériau très résistant contient entre 15 % et 30 % environ, de préférence environ 20 %, de charges, de préférence de fibres de verre.

24. Dispositif d'entraînement selon l'une des revendications 1 à 23, **caractérisé en ce que** le matériau non métallique très résistant contient entre 45% et 65 % environ, de préférence environ 60 % de matières minérales.
